Europäisches Patentamt

European Patent Office

Office européen des brevets

(19)

(11) Veröffentlichungsnummer: **0 183 640**
**A1**

(12) **EUROPÄISCHE PATENTANMELDUNG**

(21) Anmeldenummer: **85730152.7**

(22) Anmeldetag: **18.11.85**

(51) Int. Cl.4: **G01L 9/06** , G01L 13/02

(30) Priorität: **26.11.84 DE 3443419**

(43) Veröffentlichungstag der Anmeldung:
**04.06.86 Patentblatt 86/23**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **von Rauch, Moriz, Ing. grad.**
**Kiefernweg 3**
**D-1000 Berlin 19(DE)**

(54) **Druckdifferenz-Messgerät mit einem Halbleiter-Drucksensor.**

(57) Die Erfindung bezieht sich auf ein Druckdifferenz-Meßgerät mit einem Halbleiter-Drucksensor in einem Druckaufnahmekörper, der stirnseitig jeweils eine Trennmembran mit benachbarter Zusatzmembran trägt. Beiderseits des Halbleiter-Drucksensors ist jeweils ein Verbindungskanal fortgeführt, der in Stichkanälen zu einer Trennmembran und einer Zusatzmembran mündet.

Um ein Druckdifferenz-Meßgerät dieser Art mit einer mechanischen Dämpfung ohne nachteilige Folgen für die Wirkungsweise des Überlastschutzes zu versehen, ist in mindestens einem Verbindungskanal (29, 34) ein Dämpfungselement (44, 45) angeordnet; dem Halbleiter-Drucksensor (22) ist eine Ausgleichsmembran (40) zugeordnet, deren beide Seiten mit jeweils einem Verbindungskanal (29, 34) im Bereich zwischen dem Halbleiter-Drucksensor (22) und dem Dämpfungselement (44, 45) verbunden sind.

EP 0 183 640 A1

Druckdifferenz-Meßgerät mit einem Halbleiter-Drucksensor

Die Erfindung bezieht sich auf ein Druckdifferenz-Meßgerät mit einem Halbleiter-Drucksensor in einem Druckaufnahmekörper, der stirnseitig jeweils eine Trennmembran mit benachbarter Zusatzmembran trägt, wobei beiderseits des Halbleiter-Drucksensors jeweils ein Verbindungskanal fortgeführt ist und von jedem Verbindungskanal an seinem von dem Halbleiter-Drucksensor abgewandten Ende ein Stichkanal zu einer Trennmembran und ein weiterer Stichkanal zu der der anderen Trennmembran benachbarten Zusatzmembran ausgeht.

Ein derartiges Druckdifferenz-Meßgerät ist aus der DE-OS 3222620 bekannt. Bei diesem bekannten Meßgerät ist infolge der Verwendung von zwei den Trennmembranen benachbarten Zusatzmembranen als Überlastschutz die vorteilhafte Möglichkeit geschaffen, den Halbleiter-Drucksensor innerhalb des Druckaufnahmekörpers unterzubringen, wodurch das gesamte Druckdifferenz-Meßgerät eine sehr kompakte Bauform erhält. Da der Halbleiter-Drucksensor des bekannten Druckdifferenz-Meßgerätes sehr trägheitsarm auf Änderungen der Druckdifferenz reagiert, ist zur Gewinnung einer weiterverarbeitbaren Meßgröße eine Dämpfung erforderlich.

Der Erfindung liegt daher die Aufgabe zugrunde, ein Druckdifferenz-Meßgerät der eingangs angegebenen Art mit einer mechanischen Dämpfung zu versehen, die ohne nachteilige Beeinflussung des Überlastschutzes durch die Zusatzmembranen unter allen Betriebsbedingungen eine Gefährdung des Halbleiter-Drucksensors ausschließt.

Zur Lösung dieser Aufgabe ist bei dem Druckdifferenz-Meßgerät der angegebenen Art in mindestens einem Verbindungskanal ein Dämpfungselement angeordnet, und dem Halbleiter-Drucksensor ist eine Ausgleichsmembran mit einer Steifigkeit zugeordnet, die größer als die der Zusatzmembranen, jedoch kleiner als die des Halbleiter-Drucksensors ist; beide Seiten der Ausgleichsmembran sind mit jeweils einem Verbindungskanal im Bereich zwischen dem Halbleiter-Drucksensor und dem Dämpfungselement verbunden.

Ein wesentlicher Vorteil des erfindungsgemäßen Druckdifferenz-Meßgerätes besteht darin, daß durch die gewählte Anbringung des Dämpfungselementes in Verbindung mit der Ausgleichsmembran Beschädigungen des Halbleiter-Drucksensors auch dann ausgeschlossen sind, wenn sich nach plötzlichem Fortfall eines hohen statischen Überdrucks die bis dahin komprimierte Druckübertragungsflüssigkeit im Innern des Druckaufnahmekörpers wieder ausdehnt. Infolge des Dämpfungselementes in dem mindestens einen Verbindungskanal kann nämlich die Ausdehnung der Druckübertragungsflüssigkeit unterschiedlich schnell erfolgen, wodurch ein Überdruck an dem Halbleiter-Drucksensor entstehen könnte, wenn dieser Überdruck nicht durch die gewissermaßen parallel geschaltete Ausgleichsmembran aufgenommen würde. Die Gefahr einer Beschädigung durch einen Überdruck in dem geschilderten Betriebsfall würde sich übrigens auch dann ergeben, wenn in jedem Verbindungskanal ein Dämpfungselement angeordnet ist, weil sich unterschiedlich große Volumina der Druckübertragungsflüssigkeit beiderseits des Halbleiter-Drucksensors praktisch nicht vermeiden lassen.

Es ist zwar aus der DE-OS 3047276 ein Druckdifferenz-Meßgerät mit einem Halbleiter-Drucksensor bekannt, bei dem in einem von einer Kammer einer Trennmembran ausgehenden Kanal ein Dämpfungselement vorhanden ist, jedoch liegt dort das Dämpfungselement an einer ganz anderen Stelle, weil es sich bei dem bekannten Meßgerät um ein Druckdifferenz-Meßgerät einer ganz anderen Art handelt; denn bei dem Druckdifferenz-Meßgerät nach der DE-OS 3047276 ist zum Schutz gegen Überlastung eines Halbleiter-Drucksensors zwischen den beiden Trennmembranen im Druckaufnahmekörper in einer Ebene parallel zu den Trennmembranen eine Mittenmembran angeordnet, von der beiderseits Kanäle zu den Trennmembranen und zu dem Halbleiter-Drucksensor führen. Der Halbleiter-Drucksensor ist daher hydraulisch parallel zur Mittenmembran angeordnet. Wird von außen über eine Trennmembran eine Überlast auf den Druckaufnahmekörper des bekannten Meßgerätes übertragen, dann wird die von der Trennmembran hervorgerufene Volumenverschiebung durch Auslenkung der Mittenmembran aufgenommen, so daß der Halbleiter-Drucksensor von der Überlast verschont wird. Dies gilt auch dann, wenn die durch hohen statischen Überdruck komprimierte Druckübertragungsflüssigkeit sich nach Fortfall des statischen Überdrucks plötzlich ausdehnt, weil durch das Dämpfungselement auftretende ungleiche Ausdehnungen infolge der dem Halbleiter-Drucksensor parallel liegenden Mittenmembran keine Auswirkung auf den Halbleiter-Drucksensor haben. Dies ist aber nur durch die beschriebene Anordnung der Mittenmembran und durch eine Unterbringung des Halbleiter-Drucksensors außerhalb des Druckaufnahmekörpers in einem angeflanschten Zusatzgehäuse möglich.

Bei dem erfindungsgemäßen Druckdifferenz-Meßgerät ist die Ausgleichsmembran vorteilhafterweise dem Halbleiter-Drucksensor unmittelbar benachbart angeordnet und der eine Verbindungskanal endet im Bereich zwischen dem Halbleiter-Drucksensor und der Ausgleichsmembran, und von dem anderen Verbindungskanal führt ein zusätzlicher Kanal zu der von dem Halbleiter-Drucksensor abgewandten Seite der Ausgleichsmembran. Diese Ausführung hat vor allem den Vorteil, daß eine den Halbleiter-Drucksensor aufnehmende Kammer auch zur Unterbringung der Ausgleichsmembran mitverwendet wird und daß nur ein einziger zusätzlicher Kanal zum Anschluß der Ausgleichsmembran erforderlich ist.

Zur Erläuterung der Erfindung ist in der

Figur 1 ein Schnitt durch ein Ausführungsbeispiel des erfindungsgemäßen Druckdifferenz-Meßgerätes quer zur Ebene der Membranen und in

Figur 2 ein Schnitt senkrecht zur ersten Schnittebene durch dasselbe Ausführungsbeispiel wiedergegeben.

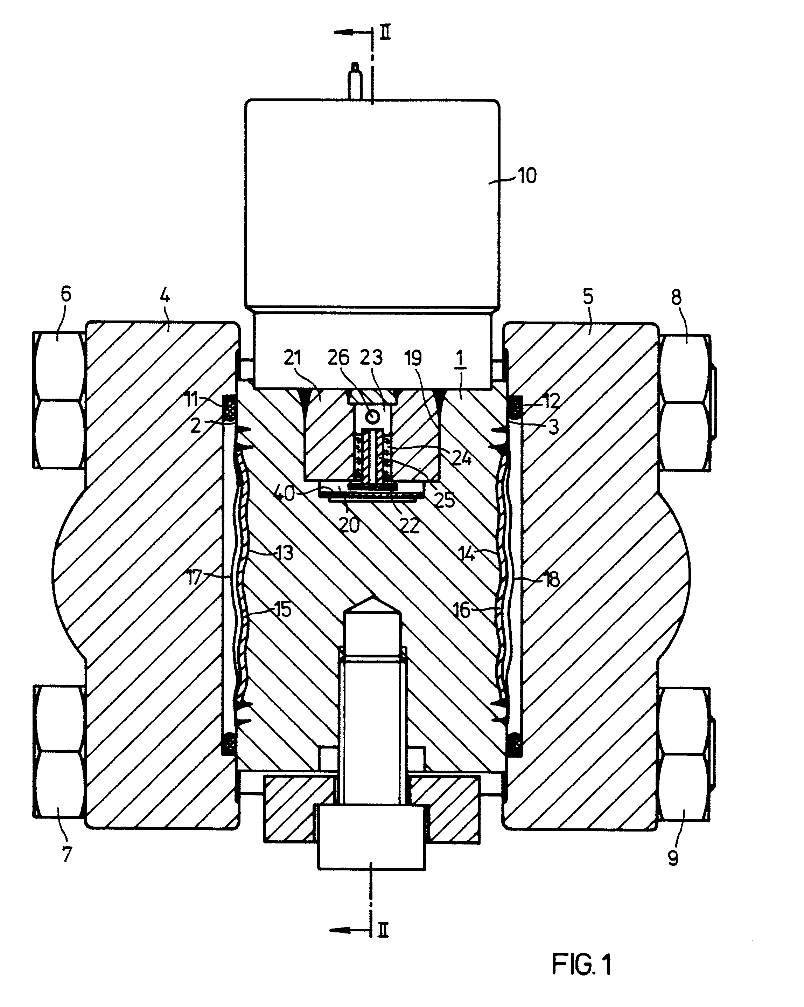

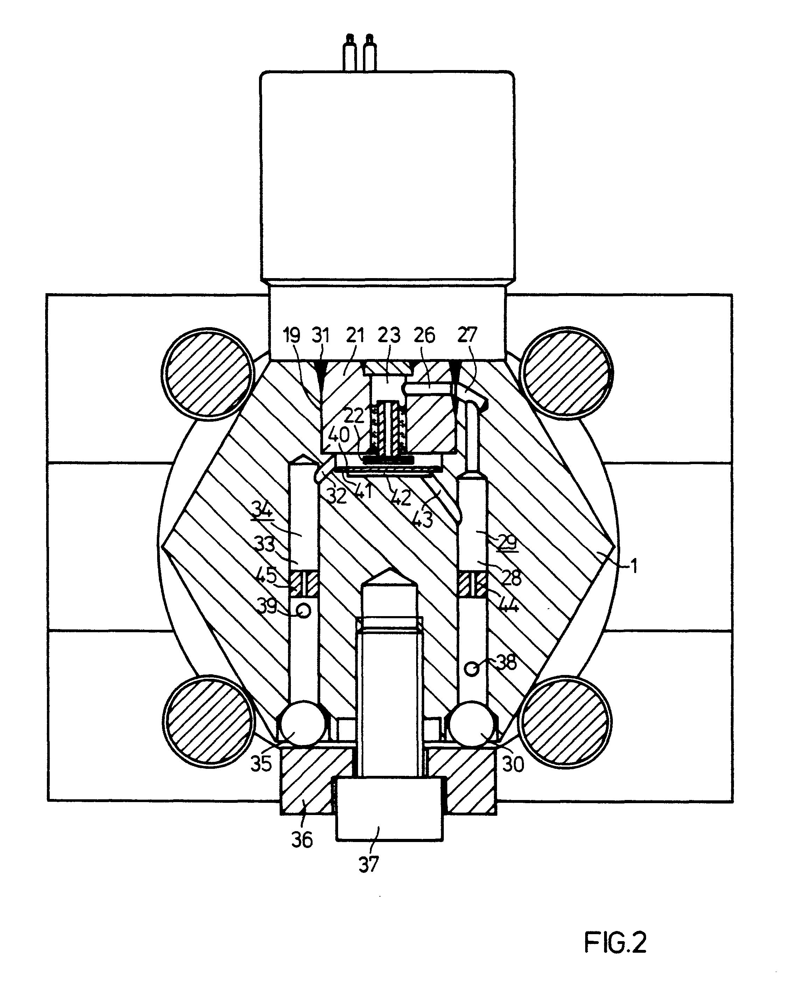

Das in den Figuren 1 und 2 dargestellte Ausführungsbeispiel eines Druckdifferenz-Meßgerätes weist einen Druckaufnahmekörper 1 auf, der an seinen beiden Stirnseiten 2 und 3 durch Gehäusekappen 4 und 5 abgedeckt ist. Über nicht sichtbare Öffnungen in den Gehäusekappen ist das Meßgerät an das Medium angeschlossen, dessen Druckdifferenz erfaßt werden soll. Der Druckaufnahmekörper 1 und die Gehäusekappen 4 und 5 sind mittels Schraubbolzen 6 und 7 sowie Muttern 8 und 9 miteinander verspannt. Im Bereich zwischen den Gehäusekappen 4 und 5 in den Figuren oberhalb des Druckaufnahmekörpers 1 befindet sich ein Gehäuse 10, in dem die elektronische Schaltung des Meßgerätes oder Teile der Schaltung untergebracht sind; zur besseren Übersichtlichkeit ist in den Figuren das Gehäuse 10 nur in seinem äußeren Umriß wiedergegeben.

Wie insbesondere Figur 1 erkennen läßt, sind die Gehäusekappen 4 und 5 über jeweils einen Dichtring 11 und 12 an den Druckaufnahmekörper 1 gepreßt. Der Druckaufnahmekörper 1 ist an seinen beiden Stirnseiten 2 und 3 so ausgebildet, daß dort jeweils ein Membranbett 13 und 14 gebildet ist. Mit dem Druckaufnahmekörper 1 ist an den beiden Stirnseiten 2 und 3 jeweils eine Zusatzmembran 15 bzw. 16 verschweißt, wobei die Zusatzmembranen 15 und 16 jeweils eine derartige Vorspannung aufweisen, daß sie sich an das jeweilige Membranbett 13 bzw. 14 anpressen. Ebenfalls an den Stirnseiten 2 und 3 des Druckaufnahmekörpers 1 ist jeweils eine Trennmembran 17 und 18 angebracht. Die Zusatzmembranen 15 und 16 sind im Durchmesser kleiner ausgeführt als die Trennmembranen 17 und 18.

Der Druckaufnahmekörper 1 weist im Umfangsbereich zwischen den Membranen außen eine topfartige Ausnehmung 19 auf, die in dem dargestellten Ausführungsbeispiel zum Innern des Druckaufnahmekörpers 1 hin eine weitere Ausnehmung 20 mit kleineren Abmessungen aufweist. In die topfartige Ausnehmung 19 ist ein Tragkörper 21 eines Halbleiter-Drucksensors 22 eingesetzt. Der Tragkörper 21 ist mit einer oben zugeschweißten Längsbohrung 23 versehen, in der mittels einer Glasschmelze 24 ein Röhrchen 25 gehalten ist. Dieses Röhrchen 25 steht etwas aus dem Tragkörper 21 nach unten aus der Längsbohrung 23 hervor. An dem hervorstehenden Ende des Röhrchens 25 ist der Halbleiter-Drucksensor 22 hermetisch dicht angebracht, bei dem es sich um einen Halbleiter-Drucksensor mit bekanntem Aufbau handeln kann (vgl. z. B. DE-OS 2617731).

Wie insbesondere die Figur 2 erkennen läßt, weist der Tragkörper 21 eine Querbohrung 26 auf, die sich von der Längsbohrung 23 bis zum Rande des Tragkörpers 21 erstreckt. Im eingesetzten Zustand mündet die Querbohrung 26 in einen druckübertragenden Kanal 27 im Druckaufnahmekörper 1. Der druckübertragende Kanal 27 bildet zusammen mit der Querbohrung 26 und einem Kanalstück 28 einen Verbindungskanal 29, der von der in den Figuren oberen Seite des Halbleiter-Drucksensors 22 fortgeführt ist; nach außen hin ist der Verbindungskanal 29 über eine Kugeldichtung 30 abgedichtet.

Der Tragkörper 21 ist mittels einer Schweißverbindung 31 fest mit dem Druckaufnahmekörper 1 an seinem äußeren Rande verbunden. Dabei ist durch die Lage der Querbohrung 26 und die Ausführung der Schweißverbindung 31 dafür gesorgt, daß im Bereich der Übergangsstelle von der Querbohrung 26 zum druckübertragenden Kanal 27 eine Abdichtung um die Übergangsstelle herum unter Freilassung einer Durchgangsöffnung entsteht. Es kann daher nicht in unerwünschter Weise der Druck im druckübertragenden Kanal 27 an der zylindrischen Trennfuge zwischen dem Tragkörper 21 und dem Druckaufnahmekörper 1 entlang zur unteren Seite des Halbleiter-Drucksensors 22 gelangen, der in der weiteren Ausnehmung 20 liegt. In diese weitere Ausnehmung 20 mündet nämlich ein weiterer druckübertragender Kanal 32. Der weitere druckübertragende Kanal 32 ist an ein weiteres Kanalstück 33 angeschlossen, das mit dem weiteren druckübertragenden Kanal 32 einen weiteren Verbindungskanal 34 bildet, der durch eine weitere Kugel 35 nach außen abgedichtet ist, indem über ein Druckstück 36 und einen Gewindebolzen 37 die beiden Kugeln 30 und 35 gegen ihre Dichtstelle gepreßt werden. Beide Verbindungskanäle 29 und 34 liegen in derselben Ebene, die eine Parallelebene zu den Stirnseiten 2 und 3 des Druckaufnahmekörpers 1 darstellt.

Von den Verbindungskanälen 29 und 34 gehen bei dem dargestellten Ausführungsbeispiel mit jeweils zwei Trennmembranen 17 und 18 und zwei Zusatzmembranen 15 und 16 jeweils ein Stichkanal und ein weiterer Stichkanal ab, von denen in der Figur 2 nur jeweils ein Stichkanal 38 bzw. ein weiterer Stichkanal 39 erkennbar ist. Von diesen Kanälen führt der eine Stichkanal 38 zur Trennmembran 17 und der weitere Stichkanal 39 zur Zusatzmembran 15 auf ein und derselben Stirnseite 2 des Druckaufnahmekörpers 1. Ein weiterer nicht dargestellter Stichkanal führt von dem Verbindungskanal 29 zur Zusatzmembran 16 und ein zusätzlicher (ebenfalls nicht gezeigter) Stichkanal von dem weiteren Verbindungskanal 34 zur Trennmembran 18. Sämtliche Kanäle im Innern des Druckaufnahmekörpers 1 sowie die Querbohrung 26 und die weitere Ausnehmung 20 sind mit einer Druckübertragungsflüssigkeit gefüllt.

In der Ausnehmung 20 des Druckaufnahmekörpers 1 ist eine Ausgleichsmembran 40 angebracht, indem sie an ihrem Rande in nicht dargestellter Weise mit dem Boden 41 der Ausnehmung 20 verschweißt ist. Unterhalb der Ausgleichsmembran 40 befindet sich ein mit Druckübertragungsflüssigkeit gefüllter Freiraum 42, der eine Auslenkung der Ausgleichsmembran 40 zuläßt. In diesen Freiraum 42 mündet ein zusätzlicher Kanal 43, der zu dem einen Verbindungskanal 29 führt. Die Ausgleichsmembran 40 ist daher parallel zum Halbleiter-Drucksensor 22 angeordnet.

Bei dem dargestellten Ausführungsbeispiel befindet sich in jedem Verbindungskanal 29 bzw. 34 ein Dämpfungselement 44 bzw. 45 und zwar jeweils an einer Stelle zwischen dem Halbleiter-Drucksensor 22 und den Abgängen der Stichkanäle 38 bzw. 39. Diese Dämpfungselemente sorgen dafür, daß die von dem Halbleiter-Drucksensor abgegebene Meßgröße nicht durch kurze Druckschläge beeinflußt ist, was sonst wegen des sehr trägheitsarmen Verhaltens des Sensors der Fall wäre.

Im normalen Betriebszustand des Druckdifferenz-Meßgerätes ist die Druckübertragungsflüssigkeit innerhalb des Druckaufnahmekörpers 1 und damit auch im Bereich zwischen den Dämpfungselementen 44 und 45 und dem Halbleiter-Drucksensor 22 infolge des statischen Druckes komprimiert. Fällt der statische Druck plötzlich ab, dann dehnt sich die Druckübertragungsflüssigkeit im Druckaufnahmekörper 1 und daher auch im Bereich zwischen den Dämpfungselementen 44 und 45 und dem Halbleiter-Drucksensor 22 aus. Aufgrund eines in der Regel unterschiedlich großen Volumens der Druckübertragungsflüssigkeit beiderseits des Halbleiter-Drucksensors 22 könnte sich bei dieser Ausdehnung der Druckübertragungsflüssigkeit eine Druckdifferenz ergeben, die schädlich für den Halbleiter-Drucksensor 22 ist. Zu einer solchen gefährlich hohen Druckdifferenz kommt es bei dem Meßgerät jedoch nicht, weil diese durch die Ausgleichsmembran 40 verhindert wird, deren Steifigkeit größer als die der Zusatzmembranen 16 und 17 und kleiner als die des Halbleiter-Drucksensors 22 ist.

**Ansprüche**

1. Druckdifferenz-Meßgerät mit einem Halbleiter-Drucksensor in einem Druckaufnahmekörper, der stirnseitig jeweils eine Trennmembran mit benachbarter Zusatzmembran trägt, wobei beiderseits des Halbleiter-Drucksensors jeweils ein Verbindungskanal fortgeführt ist, und von jedem Verbindungskanal an seinem von dem Halbleiter-Drucksensor abgewandten Ende ein Stichkanal zu einer Trennmembran und ein weiterer Stichkanal zu der anderen Trennmembran benachbarte Zusatzmembran ausgeht, **dadurch gekennzeichnet**, daß in mindestens einem Verbindungskanal (29, 34) ein Dämpfungselement (44, 45) angeordnet ist, daß dem Halbleiter-Drucksensor (22) eine Ausgleichsmembran (40) mit einer Steifigkeit zugeordnet ist, die größer als die der Zusatzmembranen (16, 17), jedoch kleiner als die des Halbleiter-Drucksensors (22) ist, und daß beide Seiten der Ausgleichsmembran (40) mit jeweils einem Verbindungskanal (29, 34) im Bereich zwischen dem Halbleiter-Drucksensor (22) und dem Dämpfungselement (44, 45) verbunden sind.

2. Meßgerät nach Anspruch 1 , **dadurch gekennzeichnet**, daß die Ausgleichsmembran (40) dem Halbleiter-Drucksensor (22) unmittelbar benachbart angeordnet ist und daß der eine Verbindungskanal (34) im Bereich zwischen dem Halbleiter-Drucksensor (22) und der Ausgleichsmembran (40) endet und von dem anderen Verbindungskanal (29) ein zusätzlicher Kanal (43) zu der von dem Halbleiter-Drucksensor (22) abgewandten Seite der Ausgleichsmembran (40) führt.

0 183 640

FIG. 1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 558 770 (BELL & HOWELL LTD.) * Insgesamt * | 1 | G 01 L 9/06 G 01 L 13/02 |
| A | GB-A-2 086 587 (VEB GERÄTE- UND REGLER-WERKE TELTON) * Insgesamt * | 1 | |
| A | GB-A-2 091 883 (SKIL CONTROLS LTD.) * Insgesamt * | 1 | |
| A | US-A-4 452 069 (T. HATTORI et al.) * Insgesamt * | 1 | |

RECHERCHIERTE SACHGEBIETE (Int. Cl.4)

G 01 L 9
G 01 L 13
G 01 L 19

Der vorliegende Recherchenbericht wurde für alle Patentansprüche erstellt.

| Recherchenort DEN HAAG | Abschlußdatum der Recherche 17-02-1986 | Prüfer VAN ASSCHE P.O. |
|---|---|---|